# EUROPÄISCHE PATENTSCHRIFT

(11) **EP 2 792 915 B1**
(45) Veröffentlichungstag und Bekanntmachung des Hinweises auf die Patenterteilung: **06.12.2017**
(21) Anmeldenummer: 14165430.1
(22) Anmeldetag: 22.04.2014
(51) Int. Cl.: F16J 15/02, F16L 25/00

(54) **Wellrohrverbindung**
Corrugated pipe connection
Raccord de tôle ondulée

(30) Priorität: 19.04.2013 DE 102013006817
(43) Veröffentlichungstag der Anmeldung: 22.10.2014
(73) Patentinhaber: LWM Werkzeug- und Maschinenbau GmbH, 49377 Vechta (DE)
(72) Erfinder: Lamping, Alwin, 49393 Lohne (DE)
(74) Vertreter: Jabbusch, Matthias

(56) Entgegenhaltungen:
- EP-B1- 1 092 906
- EP-B1- 1 325 257
- US-A1- 2002 153 674
- US-A1- 2011 187 059

## Beschreibung

Die Erfindung betrifft einen Dichtungsring für ein Wellrohr nach Patentanspruch 1, sowie eine Wellrohrverbindung nach Patentanspruch 2. Ein Wellrohr der eingangs genannten Art ist aus der US 2011/187059 A1 bekannt. Die Stützkörper sind hier im unteren Bereich des Dichtungsrings angeordnet und legen sich beim Einschieben flach an den Dichtungsring an.
Aus der EP 1 325 257 B1 ist ebenfalls eine Wellrohrverbindung bekannt. Bei dieser ist das Volumen des Grundkörpers kleiner als das Volumen des den Grundkörper aufnehmenden Wellentals. Es bleiben daher in dem Wellental des Wellrohres bei aufgenommenen Dichtungsring Freiräume.
Ein Wellrohr mit einem in einem Wellental des Wellrohres aufgenommenen Dichtungsring und einem zweiten Rohr, das auf das Wellrohr und den Dichtungsring aufgeschoben ist, wobei der Dichtungsring einen vertikalen in dem Wellental angeordneten Grundkörper und eine daran anschließende Hauptdichtung aufweist, wobei von dem Grundkörper zwei seitliche Stützkörper ausgehen, ist aus der EP 1 092 906 B1 bekannt. Der beschriebene Dichtungsring wird in dem Wellental eines Wellrohres aufgenommen. Beim Einschieben des Wellrohres in ein zweites Rohr wird eine Hauptdichtung seitlich abgelenkt und drückt den angrenzenden Stützkörper zusammen. Dabei wird der Dichtungsring, der im unbelasteten Zustand spannungsfrei im Wellental aufgenommen ist, in das Wellental hineingedrückt, so dass die seitlichen Stützkörper der Dichtung so umgelenkt werden, dass der Stützkörper, insbesondere die Stützlippen des Stützkörpers sich an die Hauptdichtung anlegen. Die Hauptdichtung selbst wird in ihrem äußeren Bereich um etwa 90° abgelenkt, so dass die abgelenkte innere Seite der Hauptdichtung auf der angrenzenden Stützlippe des Stützkörpers zur Auflage kommt, während die gegenüberliegende Seite der Hauptdichtung die Dichtung gegenüber dem äußeren Rohr bewirkt. Die vorliegende Erfindung betrifft eine Weiterentwicklung dieses bekannten Dichtungsrings, so dass auf die Beschreibung der EP 1092906 B1 für übereinstimmende Teile Bezug genommen wird.

Der Erfindung liegt die Aufgabe zugrunde, einen Dichtungsring sowie ein Wellrohr der eingangs genannten Art weiterzuentwickeln, so dass der Dichtungsring kostengünstiger herstellbar ist.

Die Lösung dieser Aufgabe erfolgt mit einem Dichtungsring und Wellrohr mit den Merkmalen der Patentansprüche 1 und 2. Bei einer Wellrohrverbindung mit mindestens einem Wellrohr und einem in einem Wellental des Wellrohres aufgenommenen Dichtungsring und einem zweiten Rohr, das auf das Wellrohr und den Dichtungsring aufgeschoben ist, wobei der Dichtungsring einen vertikal in dem Wellental angeordneten Grundkörper und eine daran anschließende Hauptdichtung aufweist, wobei von dem Grundkörper zwei seitliche Stützkörper ausgehen, ist erfindungswesentlich vorgesehen, dass der Grundkörper in dem Bereich, in dem er von den Stützkörpern im eingebauten Zustand kontaktiert ist, je eine Schrägschulter aufweist, und dass die Stützkörper in an die Schrägschultern im eingebauten Zustand angrenzenden Bereichen zu den von den Schrägschultern gebildeten Flächen korrespondierende Fläche aufweisen.

Unter einer Schrägschulter wird eine gegenüber der Mittelsenkrechten des Dichtungsringes um einen nicht rechten Winkel geneigte Fläche verstanden. Diese Fläche bildet eine Schräge, die sich von einem schmaleren Bereich, der auf der dem Wellental abgewandten Seite des Dichtungsrings zu der Seite, die dem Wellental zugewandt ist, erweitert.

Die Stützkörper sind beim Einbau zum offenen Ende des Wellentals bewegbar und kontaktieren im eingebauten Zustand die Hauptdichtung. Die Stützkörper werden beim Einschieben des Dichtrings in ein Wellental nach oben gebogen und dichten beim Einschieben des Wellrohres in ein zweites Rohr den Raum zwischen Wellrohr und zweitem Rohr zusammen mit der Hauptdichtung ab, wobei die Hauptdichtung dabei abgelenkt wird und die Dichtung gegenüber dem äußeren Rohr bewirkt. Die Stützkörper sind daher so bemessen und dimensioniert, dass diese gemeinsam mit der Hauptdichtung die Abdichtung zwischen dem Wellrohr und dem zweiten Rohr bewirken.

Da die Stützkörper beim Einschieben in das Wellental nach oben gedrückt werden und dann mit der Schrägschulter in Anlage kommen, sind die Stützkörper, von der Hauptdichtung aus gesehen, unterhalb der Schrägschultern mit dem Grundkörper des Dichtungsrings verbunden. Die Stützkörper gehen also von einem Bereich des Grundkörpers aus, der zwischen den Schrägschultern und dem wellentalseitigen Ende des Grundkörpers liegt. Die Stützkörper sind mit der Hauptdichtung zunächst über einen schmaleren Bereich verbunden und erweitern sich dann nach außen. Dieser erweiterte Bereich ist dann, so wie oben beschrieben, so bemessen und dimensioniert, dass dieser gemeinsam mit der Hauptdichtung die Abdichtung zwischen dem Wellrohr und dem zweiten Rohr bewirkt.

Durch den von den Stützkörpern auf die Schrägschultern ausgeübten Druck gleiten bei zunehmender Druckbelastung die Stützkörper an den Schrägschultern nach außen und verpressen sich zwischen den benachbarten Wänden des Wellentals. Beim Verpressen entsteht bei der erfindungsgemäßen Wellrohrverbindung eine Keilverpressung zwischen dem Grundkörper und den Seitenflächen des Wellentals des Wellrohres. Die vom eingeführten Rohr ausgehenden Kräfte wirken keilförmig. Unter der korrespondierenden Fläche an den Stützkörpern ist nicht zu verstehen, dass die Fläche die gleiche Größe aufweisen muss wie die Fläche an der Schrägschulter. Vielmehr ist darunter zu verstehen, dass an dem Stützkörper ebenfalls eine Fläche vorhanden ist, die im eingebauten Zustand flächig an der Schrägschulter anliegt, so dass eine gleitende oder rutschende Verschiebung des Stützkörpers an dieser Fläche entlang der von der Schrägschulter gebildeten Fläche nach außen erfolgt.

Bevorzugt ist die Schrägschulter des Grundkörpers im oberen Drittel des Wellentals positioniert. Insgesamt ist also der Dichtungsring so ausgebildet, dass die Schrägschulter bzw. Schrägschultern im oberen Drittel des Wellentals positioniert sind. Im eingebauten Zustand ergibt sich dann eine Verpressung des Dichtungsrings, genauer gesagt der Stützkörper mit dem oberen Teil des Grundkörpers von einer Seitenwand zu anderen Seitenwand des Wellentals. Ein sich daraus ergebender Vorteil ist der, dass der untere Teil des Dichtungsrings keine abdichtende Funktion mehr übernehmen muss und im Wesentlichen zur Positionierung und Lagejustierung des oberen Teils dient. Der untere Teil kann dadurch mit weniger Material und damit einfacher und kostengünstiger ausgebildet werden. Die beiden Schrägschultern auf beiden Seiten der Dichtung sind bevorzugt symmetrisch zueinander ausgebildet. Ebenso sind die Stützkörper bevorzugt symmetrisch zueinander ausgebildet. In einer bevorzugten Ausgestaltung der Erfindung ist der Dichtungsring insgesamt spiegelsymmetrisch ausgebildet. Die Symmetrie bezieht sich dabei insbesondere auf eine senkrechte Mittelebene, die sich vertikal durch den Dichtungsring erstreckt.
Die Schrägschulter weist gegenüber einer Mittelsenkrechten des Dichtungsrings eine Neigung nach außen zum Boden des Wellentals hin auf. Erfindungsgemäß hat die Schrägschulter dabei einen Winkel gegenüber der Mittelsenkrechten des Dichtungsrings zwischen 20° und 70°, insbesondere zwischen 30° und 60°, insbesondere zwischen 30° und 50° und besonders bevorzugt zwischen 35° und 45°, alternativ liegt der bevorzugte Winkelbereich zwischen 30° und 40°.

In einer weiteren bevorzugten Ausgestaltung der Erfindung hat der Grundkörper an die Schrägschultern nach unten zum Boden des Wellentals hin anschließend einen etwa vertikal verlaufenden Abschnitt. An dem Endbereich des vertikal verlaufenden Abschnitts ist der Übergang zwischen dem Grundkörper und dem seitlichen Stützkörper ausgebildet. Der vertikal verlaufende Abschnitt ist bevorzugt kürzer als die Länge der Schrägschulter jedoch bevorzugt länger als die Hälfte der Länge der Schrägschulter. Weiterhin ist die Schrägschulter bevorzugt so ausgebildet, dass sie an dem nach oben gelegenen Endbereich in eine Hauptdichtung übergeht. Der nach oben gelegene Endbereich ist der aus dem Wellental herausführende Bereich. Man kann hier auch bezogen auf das Wellrohr von der äußeren Seite sprechen.

In einer anderen bevorzugten Ausgestaltung der Erfindung ist der Grundkörper kleiner als das Wellental des Wellenrohres, in dem der Dichtungsring aufgenommen ist. Dies ist insbesondere so zu verstehen, dass das Volumen des Grundkörpers kleiner ist als das Volumen des den Grundkörper aufnehmenden Wellentals des Wellrohres, in dem der Dichtungsring aufgenommen ist, so dass in dem Wellental Freiräume verbleiben. Der Grundkörper füllt das Wellrohr also nicht vollständig aus. Es verbleiben Freibereiche zwischen dem Grundkörper und den Seiten oder Wellenflanken des Wellentals. Es wird also nicht so viel Material benötigt. Insbesondere bei großen Wellrohren ist dies ein großer Vorteil, da dadurch eine erhebliche Materialersparnis und Energieersparnis beim Ausformen des Dichtungsrings erzielt wird. Bevorzugt weist der Grundkörper im unteren Bereich nach unten und zu den Seiten gerichtete Vorsprünge auf, die die Wand des Wellrohres kontaktieren, wobei zwischen den Vorsprüngen zwischen dem Grundkörper des Dichtungsrings und dem Wellrohr Freiräume verbleiben. Ermöglicht wird eine solche Ausgestaltung insbesondere auch dadurch, dass eine Abdichtung im oberen Teil des Dichtungsrings zwischen den Seitenwänden oder Wellenflanken des Wellrohres über die Stützkörper und die Schrägschultern des Dichtungsrings erfolgt.

Insbesondere wird Schutz für ein Wellrohr beansprucht, welches mit einer Hauptdichtung zur Abdichtung gegen ein gegen das Wellrohr aufnehmendes zweites Rohr und zwei seitlichen, von einem Grundkörper ausgehenden Stützkörpern zur Anlage an die Wellenflanken des Wellrohres ausgebildet und in einem Wellental des Wellrohres aufnehmbar ist und sich dadurch auszeichnet, dass der Grundkörper zwei Schrägschultern aufweist und dass die Stützkörper in an den Schrägschultern im eingebauten Zustand angrenzenden Bereichen zu den an den Schrägschultern ausgebildeten Flächen korrespondierende Flächen aufweisen.
Nachfolgend wird die Erfindung anhand eines in der Zeichnung beschriebenen Ausführungsbeispiels weiter erläutert. Im Einzelnen zeigen die Schematischen Darstellungen in:
- Figur 1:: Einen Querschnitt durch einen erfindungsgemäßen Dichtungsring;
- Figur 2:: einen Querschnitt durch den erfindungsgemäßen Dichtungsring aus Figur 1 im eingebauten Zustand in einem Wellrohr;
- Figur 3:: einen Querschnitt durch ein Wellrohr mit eingebauten Dichtungsring und aufgeschobenem zweiten Rohr;
- Figur 4:: einen Querschnitt durch eine zweite Ausführungsform eines erfindungsgemäßen Dichtungsrings.

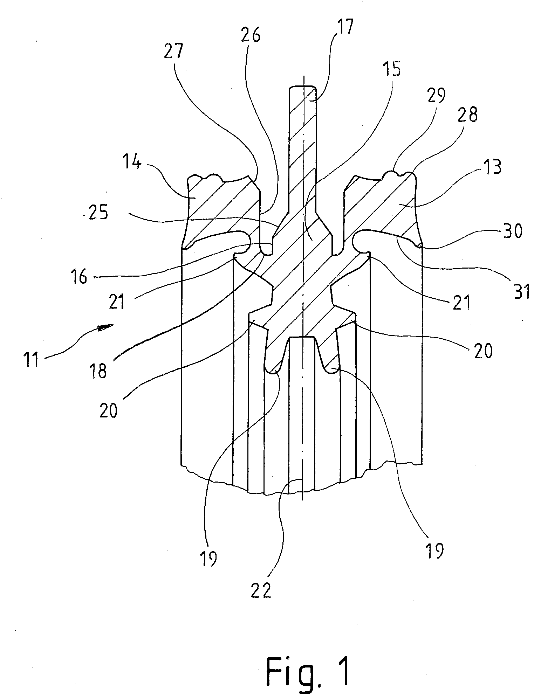

In Figur 1 ist ein Dichtungsring 11 für ein Wellrohr 1 im Querschnitt dargestellt. Der Dichtungsring 11 weist einen Grundkörper 15, eine Hauptdichtung 17 und zwei am Grundkörper 15 angeordnete Stützkörper 13, 14 auf. Im unteren Bereich sind an dem Grundkörper 15 Vorsprünge 19, 20, 21 angeordnet. Der Dichtungsring 11 ist symmetrisch bzgl. einer Mittelsenkrechten 22 aufgebaut. Eine Beschreibung des Stützkörpers 13 oder des Stützkörpers 14 gilt daher umgekehrt auch für die jeweilige andere Seite. An dem Grundkörper 15 sind zwei nach unten gerichtete Vorsprünge 19 angeordnet. Weiterhin weist der Grundkörper 15 zwei jeweils zu den Seiten gerichtete Vorsprünge 20, 21 auf. Die Vorsprünge 21 sind dabei schon im Bereich der seitlichen Stützkörper 13, 14 positioniert. Am Grundkörper 15 ist im oberen Bereich eine Schrägschulter 25 ausgebildet. Diese ist im Übergang zwischen der Hauptdichtung 17 und einer weiteren vertikalen Fläche 16 vorgesehen. Die vertikale Fläche 16 geht im unteren Bereich dann über eine Abrundung in die seitlichen Stützkörper 13, 14 über. Die Schrägschulter 25 weist gegenüber der Mittelsenkrechten 22 einen Winkel von etwa 35° auf. Dieser Winkel kann auch in einem größeren Bereich variieren und liegt bevorzugt zwischen 30° und 40°, allgemeiner sogar zwischen 25° und 50°. Die Stützkörper 13, 14 weisen eine zu der von der Schrägschulter 25 gebildeten Fläche korrespondierenden Fläche 26 auf, die im eingebauten Zustand auf der Schrägschulter 25 liegt und an dieser abgleitet bzw. an dieser entlang nach außen gedrückt wird, so dass es zu einem Verkeilen und Verpressen der Dichtung, insbesondere der Stützkörper 13, 14 mit dem Grundkörper 15 im Bereich der Schrägschulter 25 kommt. Oberhalb dieser Fläche 26 weisen die Stützkörper 13, 14 eine Anlagefläche 27 zur Anlage an die Hauptdichtung 17 oberhalb der Schrägschulter 25 auf. Die Stützkörper 13, 14 weisen weiterhin Abstreiflippen 28, 29 auf, die zur Anlage an ein zweites Rohr 10 vorgesehen sind, das das Wellrohr 1 aufnimmt. Die Stützkörper 13, 14 sind in ihrer Grundform rechteckig, weisen jedoch eine Vielzahl von Abrundungen, Abkantungen und einzelnen Vorsprüngen auf. An die zur Schrägschulter 25 korrespondierende Fläche 26 schließt sich in einem Winkel von mehr als 90° die Anlagefläche 27 an, die zur Anlage an die Hauptdichtung 17 vorgesehen ist. Im oberen Bereich der Stützkörper 13, 14 sind auch Abstreiflippen 28, 29 vorgesehen, die zur Anlage an das zweite Rohr 10 dienen. An der Unterseite ist eine geschwungene Fläche 31 mit einer Spitze 30 vorgesehen, die zur Anlage an die Wellenflanken des Wellrohres vorgesehen sind. Insbesondere liegen diese Bereiche auf dem nach oben übergehenden Teil der Wellenflanken 5, 6, also Richtung Wellenkamm an, so dass die geschwungene Fläche 31 eine entsprechend konkave Grundform aufweist.

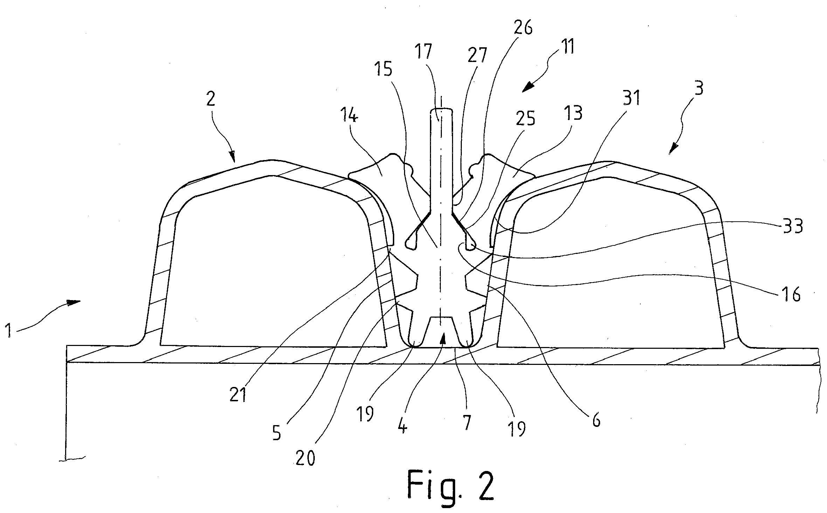

In Figur 2 ist der Dichtungsring 11 in einem Wellrohr 1 aufgenommen. Das Wellrohr 1 und der Dichtungsring 11 sind im Querschnitt dargestellt. Bei dem Wellrohr 1 sind insbesondere zwei Wellen 2, 3 dargestellt, die zwischen sich ein Wellental 4 ausbilden. Seitlich wird das Wellental 4 von den Wellenflanken 5, 6 der einzelnen Wellen 2, 3 begrenzt. Nach unten ist das Wellental 4 durch die Wand 7 des Wellrohres 1 begrenzt. Es ist gut zu erkennen, dass der Dichtungsring 11 mit den Vorsprüngen 19 auf dem Boden 7 des Wellentals 4 positioniert ist. Die seitlichen Vorsprünge 20, 21 justieren den Dichtungsring 11 an den Wellenflanken 5, 6. Zwischen den Vorsprüngen 19, 20, 21 verbleiben Freiräume 32 innerhalb des Wellentals 4. Insofern besteht eine Materialersparnis gegenüber dem Stand der Technik. Beim Einschieben des Dichtungsrings 11 in das Wellental 4 werden die Stützkörper 13, 14 hochgeklappt. Die nach innen gerichtete Fläche 26 des Stützkörpers legt sich dabei an die Schrägschulter 25 des Grundkörpers 15 an. Es verbleibt lediglich eine Kammer 33 benachbart zu der senkrechten Fläche 16 unterhalb der Schrägschulter 25. Die zur Fläche 26 mit einem Winkel von mehr als 90° abgewinkelte Anlagefläche 27 des Stützkörpers 13 liegt an der Hauptdichtung 17 an. Die Stützkörper 13, 14 sind mit ihrer geschwungenen Unterseite 31 an die in ähnlicher Form geschwungene Oberseite der Wellen 2, 3 des Wellrohres angepasst und liegen dort an. Die Spitze 31 der Stützkörper 13, 14 erstreckt sich auf den Wellen 2, 3 des Wellrohres 1.

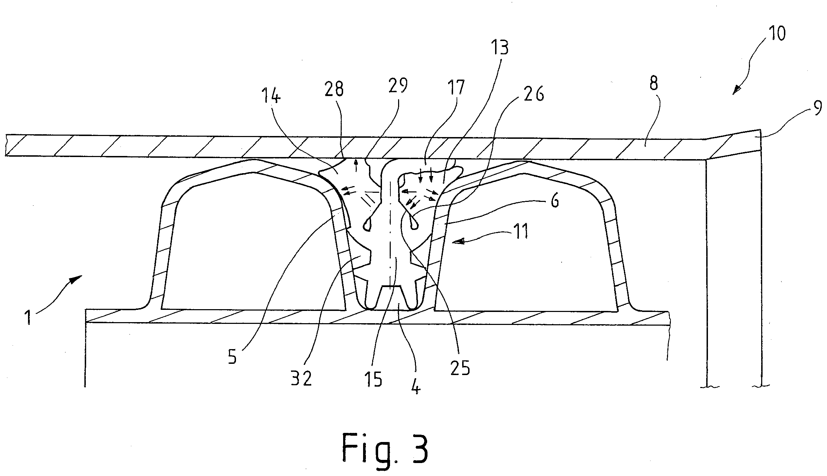

In Figur 3 ist die Wellrohrdichtung 11 im montierten Zustand dargestellt. Das Wellrohr 1 ist insgesamt in das zweite Rohr 10 eingeschoben, das eine Wandung 8 und am Anfang eine Aufweitung 9 aufweist, so dass das Einschieben leicht erfolgen kann. In der gezeigten Figur 3 ist das Rohr 10 von links nach rechts aufgeschoben worden. Beim Einschieben des Rohres 10 wird die Hauptdichtung 17, die als umlaufende Lippe ausgebildet ist, mit dem Rohr 10 umgeknickt und auf den Stützkörper 13 gepresst. Die Pfeile in dem Dichtungsring 11 zeigen die verschiedenen Kraftverläufe. Der Stützkörper 14 presst mit den Abstreiflippen 28, 29 gegen das Rohr 10 und bildet an dieser Stelle ein Gegenlager. Die Stützkörper 13, 14 liegen mit ihren Flächen 26 auf den Schrägschultern 25 des Grundkörpers 15, wobei die Stützkörper 13, 14 seitlich nach außen gedrückt werden. So ergibt sich die über die Pfeile angedeutete Verpressung des Dichtungsrings 11 zwischen den beiden Wellenflanken 5, 6 des Wellentals 4 im oberen Drittel des Wellentals 4. Der Stützkörper 14 dient als Gegenlager bei der Montage. Die Vorsprünge 19, 20, 21 dienen ebenfalls als Gegenlager bei der Montage um das Herausdrehen der Dichtung beim Stecken der Rohre zu verhindern.

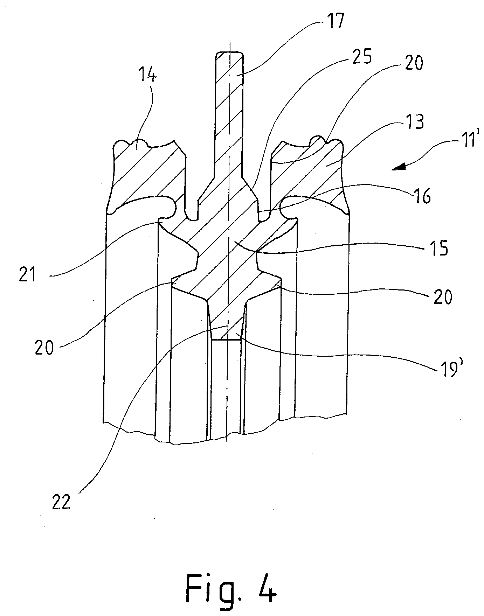

In Figur 4 ist ein Querschnitt durch eine zweite Ausführungsform eines erfindungsgemäßen Dichtungsrings 11' dargestellt. Gleiche Teile sind mit gleichen Bezugszahlen gekennzeichnet. Ein wesentlicher Unterschied ist hier, dass an dem Grundkörper 15 nach unten nur ein Fuß oder Vorsprung 19' angeordnet ist. Dieser ist zentral und symmetrisch zur Mittelsenkrechten 22 ausgebildet. Auch der Dichtungsring 11' ist spiegelsymmetrisch zur Mittelsenkrechten 22 ausgebildet.
Alle in der vorstehenden Beschreibung und in den Ansprüchen genannten Merkmale sind in einer beliebigen Auswahl mit den Merkmalen des unabhängigen Anspruchs kombinierbar. Die Offenbarung der Erfindung ist somit nicht auf die beschriebenen Merkmalskombinationen beschränkt.

## Patentansprüche

1. Dichtungsring für ein Wellrohr (1), welcher mit einer Hauptdichtung (17) zur Abdichtung gegen ein das Wellrohr (1) aufnehmendes zweites Rohr (10) und zwei seitlichen, von einem Grundkörper (15) ausgehenden Stützkörpern (13, 14) zur Anlage an die Wellenflanken (5, 6) des Wellrohres (1) ausgebildet und in einem Wellental des Wellrohres aufnehmbar ist, wobei
der Grundkörper (15) zwei Schrägschultern (25) aufweist und
die Stützkörper (13, 14) in an den Schrägschultern (25) im eingebauten Zustand angrenzenden Bereichen zu den an den Schrägschultern (25) ausgebildeten Flächen korrespondierende Flächen (26) aufweisen,
**dadurch gekennzeichnet,**
**dass** die Schrägschultern (25) gegenüber einer Mittelsenkrechten (22) des Dichtungsrings (11) eine Neigung nach außen zum Boden des Wellentals (4) hin haben und dabei einen Winkel gegenüber der Mittelsenkrechten (22) des Dichtungsrings (11) zwischen 20° und 70° haben.

2. Wellrohrverbindung mit mindestens einem Wellrohr (1) und einem in einem Wellental (4) des Wellrohres (1) aufgenommenen Dichtungsring (11) nach Anspruch 1 und einem zweiten Rohr (10), das auf das Wellrohr (1) und den Dichtungsring (11) aufgeschoben ist.

3. Wellrohrverbindung nach Anspruch 2 , **dadurch gekennzeichnet, dass** die Schrägschultern (25) im oberen Drittel des Wellentals (4) positioniert sind.

4. Wellrohrverbindung nach einem der vorhergehenden Ansprüche 2 oder 3, **dadurch gekennzeichnet, dass** die Schrägschultern (25) zu beiden Seiten des Dichtungsringes (11) symmetrisch ausgebildet sind.

5. Wellrohrverbindung nach einem der vorhergehenden Ansprüche 2-4, **dadurch gekennzeichnet, dass** die Schrägschultern (25) gegenüber einer Mittelsenkrechten (22) des Dichtungsrings (11) eine Neigung nach außen zum Boden des Wellentals (4) hin haben und dabei einen Winkel gegenüber der Mittelsenkrechten (22) des Dichtungsrings (11) zwischen 30° und 60°, insbesondere zwischen 30° und 50°, insbesondere zwischen 35° und 45° haben.

6. Wellrohrverbindung nach einem der vorhergehenden Ansprüche 2-5, **dadurch gekennzeichnet, dass** der Grundkörper (15) an die Schrägschultern (25) nach unten zum Boden (7) des Wellentals (4) hin anschließend einen etwa vertikal verlaufenden Abschnitte (16) aufweist an deren Endbereichen der Übergang zwischen dem Grundkörper und den seitlichen Stützkörpern (13, 14) angeordnet ist.

7. Wellrohrverbindung nach einem der vorhergehenden Ansprüche 2-6, **dadurch gekennzeichnet, dass** die Schrägschultern (25) an dem nach oben gelegenen Endbereich in die Hauptdichtung (17) übergehen.

8. Wellrohrverbindung nach einem der vorhergehenden Ansprüche 2-7, **dadurch gekennzeichnet, dass** das Volumen des Grundkörpers (15) kleiner ist als das Volumen-Wellental (4) des den Grundkörper (15) aufnehmenden Wellentals (4) des Wellrohres (1), in dem der Dichtungsring (11) aufgenommen ist, derart, so dass in dem Wellental (4) des Wellrohres (1) bei aufgenommenen Dichtungsring (11) Freiräume verbleiben.

9. Wellrohrverbindung nach einem der vorhergehenden Ansprüche 2-8, **dadurch gekennzeichnet, dass** der Grundkörper (15) im unteren Bereich nach unten und zu den Seiten gerichtete Vorsprünge (19, 20, 21) aufweist, die die Wellenflanken (5, 6) des Wellrohres (1) kontaktieren und zwischen den Vorsprüngen (19, 20, 21) zwischen dem Grundkörper (15) des Dichtungsrings (11) und dem Wellrohr (1) Freiräume (32) verbleiben.

10. Wellrohrverbindung nach einem der vorhergehenden Ansprüche 2-9 **dadurch gekennzeichnet, dass** die Stützkörper (13, 14) von der Hauptdichtung (17) aus gesehen unterhalb der Schrägschultern (25) dem Grundkörper (15) des Dichtungsrings (11) verbunden sind.

11. Wellrohrverbindung nach einem der vorhergehenden Ansprüche 2-10, **dadurch gekennzeichnet, dass** die Stützkörper (13, 14) derart bemessen und dimensioniert sind, dass diese gemeinsam mit der Hauptdichtung (17) die Abdichtung zwischen dem Wellrohr (1) und dem zweiten Rohr (10) bewirken.

12. Wellrohrverbindung nach einem der vorhergehenden Ansprüche 2-11, **dadurch gekennzeichnet, dass** die Stützkörper (13, 14) derart ausgebildet sind, dass diese beim Einschieben des Dichtungsrings (11) in ein Wellental (4) des Wellrohrs (1) nach oben gebogen werden.

## Claims

1. A sealing ring for a corrugated pipe (1), which is realized with a main seal (17) for sealing the corrugated pipe relative to a second pipe (10) receiving the corrugated pipe (1) and with two lateral support members (13, 14) that originate from a base body (15) and are designed for contacting the trough flanks (5, 6) of the corrugated pipe (1), wherein said sealing ring can be accommodated in a trough of the corrugated pipe, wherein
the base body (15) features two angular shoulders (25) and
the support members (13, 14) feature surfaces (26), which correspond to the surfaces formed on the angular shoulders (25), in regions that border on the angular shoulders (25) in the installed state,
**characterized in that** the angular shoulders (25) are outwardly inclined toward the bottom of the trough (4) relative to a perpendicular bisector (22) of the sealing ring (11) and their angle of inclination relative to the perpendicular bisector (22) of the sealing ring (11) lies between 20° and 70°.

2. A corrugated pipe connection with at least one corrugated pipe (1) and a sealing ring (11) according to claim 1, which is accommodated in a trough (4) of the corrugated pipe (1), and with a second pipe (10) that is pushed on the corrugated pipe (1) and the sealing ring (11).

3. The corrugated pipe connection according to claim 2, **characterized in that** the angular shoulders (25) are positioned in the upper third of the trough (4).

4. The corrugated pipe connection according to one of preceding claims 2 or 3,
**characterized in that** the angular shoulders (25) are realized symmetrically to both sides of the sealing ring (11).

5. The corrugated pipe connection according to one of preceding claims 2-4,
**characterized in that** the angular shoulders (25) are outwardly inclined toward the bottom of the trough (4) relative to a perpendicular bisector (22) of the sealing ring (11) and their angle of inclination relative to the perpendicular bisector (22) of the sealing ring (11) lies between 30° and 60°, preferably between 30° and 50°, particularly between 35° and 45°.

6. The corrugated pipe connection according to one of preceding claims 2-5,
**characterized in that** the base body (15) features sections (16), which approximately extend vertically, downwardly adjacent to the angular shoulders (25) toward the bottom (7) of the trough (4), wherein the transitions between the base body and the lateral support members (13, 14) are arranged on the end regions of said vertically extending sections.

7. The corrugated pipe connection according to one of preceding claims 2-6,
**characterized in that** the angular shoulders (25) transform into the main seal (17) on the upwardly positioned end region.

8. The corrugated pipe connection according to one of preceding claims 2-7,
**characterized in that** the volume of the base body (15) is smaller than the trough volume (4) of the trough (4) of the corrugated pipe (1), which accommodates the base body (15) and the sealing ring (11), such that clearances remain in the trough (4) of the corrugated pipe (1) when the sealing ring (11) is accommodated therein.

9. The corrugated pipe connection according to one of preceding claims 2-8,
**characterized in that** the base body (15) features downwardly and laterally directed projections (19, 20, 21) in its lower region, wherein said projections contact the trough flanks (5, 6) of the corrugated pipe (1) and clearances (32) between base body (15) of the sealing ring (11) and the corrugated pipe (1) remain between the projections (19, 20, 21).

10. The corrugated pipe connection according to one of preceding claims 2-9,
**characterized in that** the support members (13, 14) are connected underneath the angular shoulders (25) of the base body (15) of the sealing ring (11) viewed from the main seal (17).

11. The corrugated pipe connection according to one of preceding claims 2-10,
**characterized in that** the support members (13, 14) are dimensioned in such a way that they produce the seal between the corrugated pipe (1) and the second pipe (10) together with the main seal (17).

12. The corrugated pipe connection according to one of preceding claims 2-11,
**characterized in that** the support members (13, 14) are realized in such a way that they are bent upward when the sealing ring (11) is inserted into a trough (4) of the corrugated pipe (1).

## Revendications

1. Bague d'étanchéité pour un tuyau ondulé (1), laquelle est conçue avec un joint principal (17) pour l'étanchéité contre un second tuyau (10) recevant le tuyau ondulé (1) et deux corps d'appui (13, 14) latéraux partant d'un corps de base (15) pour venir s'appuyer sur les flancs ondulés (5, 6) du tuyau ondulé (1) et peut être reçue dans un creux d'ondulation du tuyau ondulé, dans lequel
le corps de base (15) présente deux épaulements inclinés (25) et
les corps d'appui (13, 14) présentent, dans des parties délimitées sur les épaulements inclinés (25) dans l'état monté, des surfaces (26) correspondant à des surfaces formées sur les épaulements inclinés (25),
**caractérisé en ce que**
les épaulements inclinés (25), par rapport à une verticale centrale (22) de la bague d'étanchéité (11), ont une inclinaison vers l'extérieur en direction du fond du creux d'ondulation (4) et ont à cet effet un angle par rapport à la verticale centrale (22) de la bague d'étanchéité (11) qui est situé entre 20° et 70°.

2. Agencement de tuyau ondulé comprenant au moins un tuyau ondulé (1) et une bague d'étanchéité (11) reçue dans un creux d'ondulation (4) du tuyau ondulé (1) selon la revendication 1 et un second tuyau (10) qui est poussé sur le tuyau ondulé (1) et la bague d'étanchéité (11).

3. Agencement de tuyau ondulé selon la revendication 2,
**caractérisé en ce que** les épaulements inclinés (25) sont positionnés dans le tiers supérieur du creux d'ondulation (4).

4. Agencement de tuyau ondulé selon l'une des revendications précédentes 2 ou 3, **caractérisé en ce que** les épaulements inclinés (25) sont conçus symétriquement des deux côtés de la bague d'étanchéité (11).

5. Agencement de tuyau ondulé selon l'une des revendications précédentes 2 - 4, **caractérisé en ce que** les épaulements inclinés (25) ont une inclinaison vers l'extérieur en direction du fond du creux d'ondulation (4) par rapport à une verticale centrale (22) de la bague d'étanchéité (11) et ont à cet effet un angle par rapport à la verticale centrale de la bague d'étanchéité (11) entre 30° et 60°, en particulier entre 30° et 50°, en particulier entre 35° et 45°.

6. Agencement de tuyau ondulé selon l'une des revendications précédentes 2 - 5, **caractérisé en ce que** le corps de base (15) présente un tronçon (16) presque vertical se raccordant sur les épaulements inclinés (25) vers le bas en direction du fond (7) du creux d'ondulation (4), sur les zones d'extrémité duquel est disposé le passage entre le corps de base et les corps d'appui latéraux (13, 14).

7. Agencement de tuyau ondulé selon l'une des revendications précédentes 2 - 6, **caractérisé en ce que** les épaulements inclinés (25) passent dans le joint principal (17) sur la zone d'extrémité placée vers le haut.

8. Agencement de tuyau ondulé selon l'une des revendications précédentes 2 - 7, **caractérisé en ce que** le volume du corps de base (15) est inférieur au creux d'ondulation de volume (4) du creux d'ondulation (4) du tuyau ondulé (1) recevant le corps de base (15), dans lequel la bague d'étanchéité (11) est reçue de telle sorte que des espaces libres restent dans le creux d'ondulation (4) du tuyau ondulé (1) lorsque la bague d'ondulation (11) est reçue.

9. Agencement de tuyau ondulé selon l'une des revendications précédentes 2 - 8, **caractérisé en ce que** le corps de base (15) présente dans une partie inférieure des saillies (19, 20, 21) dirigées vers le bas et vers les côtés, qui sont en contact avec les flancs d'ondulation (5, 6) du tuyau ondulé (1), et des espaces libres (32) restent entre les saillies (19, 20, 21) entre le corps de base (15) de la bague d'étanchéité (11) et le tuyau ondulé (1).

10. Agencement de tuyau ondulé selon l'une des revendications précédentes 2 - 9, **caractérisé en ce que** les corps d'appui (13, 14), vu du joint principal (17), sont reliés en-dessous des épaulements inclinés (25) avec le corps de base (15) de la bague d'étanchéité (11).

11. Agencement de tuyau ondulé selon l'une des revendications précédentes 2 - 10, **caractérisé en ce que** les corps d'appui (13, 14) sont ainsi mesurés et dimensionnés que ceux-ci effectuent en commun avec le joint principal (17) l'étanchéité entre le tuyau ondulé (1) et le second tuyau (10).

12. Agencement de tuyau ondulé selon l'une des revendications précédentes 2 - 11, **caractérisé en ce que** les corps d'appui (13, 14) sont ainsi conçus que ceux-ci sont pliés vers le haut lors de l'introduction de la bague d'étanchéité (11) dans un creux d'ondulation (4) du tuyau ondulé (1).
